# EUROPEAN PATENT APPLICATION

(11) **EP 4 607 267 A1**
(43) Date of publication of application: **27.08.2025**
(21) Application number: 24216817.7
(22) Date of filing: 02.12.2024
(51) Int. Cl.: G02F 1/1333, G02F 1/1339, G06F 3/041

(54) **DISPLAY PANEL**

(30) Priority: 26.02.2024 US 202463558094 P; 21.05.2024 TW 113118723
(71) Applicant: Hannstar Display Corporation, Taipei City 114762 (TW)
(72) Inventor: CHANG, Shao-Chien, 114762 Taipei City (TW); YEH, Cheng-Yen, 114762 Taipei City (TW); KAO, Ling Chih, 114762 Taipei City (TW); CHEN, Ying-Jung, 114762 Taipei City (TW); CHIU, Jing-Ya, 114762 Taipei City (TW); LUO, Qi-En, 114762 Taipei City (TW)
(74) Representative: Becker, Eberhard

(57) **Abstract**

A display panel (10, 10A, 20), including a first substrate (101), a second substrate (102), a liquid crystal layer (LCL), data lines (DL), scan lines (SL), touch signal lines (TL), pixel structures (PX, PX-A), bridge pads (BP, BP-A), electrode patterns (EP), and first spacers (SP1). The liquid crystal layer (LCL) is disposed between the first substrate (101) and the second substrate (102). The bridge pads (BP, BP-A) are disposed on the first substrate (101) and are electrically connected to the touch signal lines (TL) respectively. The electrode patterns (EP) are respectively arranged on the second substrate (102) at intervals along a first direction (D1) and a second direction (D2), and overlap the pixel electrodes (PE, PE-A) of the pixel structures (PX, PX-A). The first spacers (SP1) are disposed on the second substrate (102) and respectively abut on the bridge pads (BP, BP-A) along a stacking direction (D3) of the first substrate (101) and the second substrate (102). Each of the electrode patterns (EP) covers one of the first spacers (SP1) to be electrically connected to one of the bridge pads (BP, BP-A).

## Description

### BACKGROUND

### Technical Field

The disclosure relates to a display panel, and in particular to a display panel with a touch control function.

### Description of Related Art

In existing liquid crystal display panels with touch control functions, most of the liquid crystal layers perform display driving in an in-plane switching (IPS) mode. When a user touches the panel, the location is detected by sensing the capacitance change between each set of pixel electrode and common electrode on the same substrate. However, this touch sensing structure is not applicable to display panels that perform liquid crystal driving in a twisted nematic (TN) mode, as the capacitance change incurred by touch is shielded by the liquid crystal capacitance generated during display.

### SUMMARY

The disclosure provides a display panel that performs liquid crystal driving using electrodes disposed on two opposite sides of a liquid crystal layer. At the same time, the display panel has a structural design sufficient to realize a reliable touch control function.

A display panel of the disclosure includes a first substrate, a second substrate, a liquid crystal layer, multiple data lines, multiple scan lines, multiple touch signal lines, multiple pixel structures, multiple bridge pads, multiple electrode patterns, and multiple first spacers. The first substrate and the second substrate are disposed along a stacking direction and overlap each other. The liquid crystal layer is disposed between the first substrate and the second substrate. The data lines are arranged on the first substrate along a first direction. The scan lines are arranged on the first substrate along a second direction. The first direction intersects the second direction. The touch signal lines are disposed on the first substrate. The pixel structures are disposed on the first substrate. Each of the pixel structures has an active element and a pixel electrode. The active element is electrically connected to the pixel electrode, one of the data lines, and one of the scan lines. The bridge pads are disposed on the first substrate and are electrically connected to the touch signal lines respectively. The electrode patterns are respectively arranged on the second substrate at intervals along the first direction and the second direction, and overlap the pixel electrodes of the pixel structures. The spacers are disposed on the second substrate and located between the electrode patterns and the second substrate. The first spacers respectively abut on the bridge pads along the stacking direction, and each of the electrode patterns covers one of the first spacers to be electrically connected to one of the bridge pads.

In an embodiment of the disclosure, the display panel further includes multiple second spacers disposed on the second substrate. A first height of each of the first spacers along the stacking direction is greater than a second height of each of the second spacers along the stacking direction.

In an embodiment of the disclosure, the first spacers and the second spacers of the display panel are of a same film layer.

In an embodiment of the disclosure, the electrode patterns of the display panel cover the first spacers, and the second spacers are disposed on a side of the electrode patterns facing away from the second substrate.

In an embodiment of the disclosure, the second spacers of the display panel overlap the pixel electrodes of the pixel structures.

In an embodiment of the disclosure, the bridge pads and the pixel electrodes of the display panel are of a same film layer.

In an embodiment of the disclosure, each of the pixel structures of the display panel further includes a first transfer pattern disposed between the pixel electrode and the active element. The pixel electrode is electrically connected to the active element through the first transfer pattern. A second transfer pattern is disposed between each of the bridge pads and one of the touch signal lines. Each of the bridge pads is electrically connected to the one of the touch signal lines through the second transfer pattern. The first transfer pattern and the second transfer pattern are of a same film layer.

In an embodiment of the disclosure, each of the pixel structures further includes a reflective layer. The reflective layer has an opening overlapping the pixel electrode and defines a reflective region of each of the pixel structures. The opening of the reflective layer defines a light-transmitting region of each of the pixel structures. An orthogonal projection of the opening on a substrate surface of the first substrate falls within an orthogonal projection of the pixel electrode on the substrate surface.

In an embodiment of the disclosure, the bridge pads of the display panel and the reflective layer of each of the pixel structures are of a same film layer.

In an embodiment of the disclosure, a transfer pattern is disposed between each of the bridge pads of the display panel and one of the touch signal lines. Each of the bridge pads is electrically connected to the one of the touch signal lines through the transfer pattern. The transfer pattern and the pixel electrode are of a same film layer.

Based on the above, in the display panel in an embodiment of the disclosure, not only the pixel structures, the data lines, and the scan lines are disposed on the first substrate, the touch signal lines electrically connected to each other as well as bridge pads are also disposed on the first substrate. On the second substrate, not only the electrode patterns are disposed, the first spacer adaptable to be attached to the bridge pad is also disposed. An electric field generated when the pixel electrode on the first substrate and the electrode pattern on the second substrate are energized is used to drive the liquid crystal layer for display. In addition, the electrode pattern may be electrically connected to the touch signal line on the first substrate through the bridge pad by covering the first spacer, so as to realize the touch control function of the display panel.

### BRIEF DESCRIPTION OF THE DRAWINGS

FIG. 1 is a schematic front view of a display panel according to a first embodiment of the disclosure.
FIGs. 2 and 3 are schematic partial enlarged views of a part of a film layer of the display panel in FIG. 1.
FIGs. 4 and 5 are schematic cross-sectional views of the display panel in FIGs. 2 and 3.
FIG. 6 is a schematic cross-sectional view of the display panel shown in FIG. 5 according to another variant embodiment.
FIGs. 7 and 8 are schematic front views of the part of the film layer of the display panel according to the second embodiment of the disclosure.
FIG. 9 is a schematic cross-sectional view of the display panel in FIGs. 7 and 8.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting.

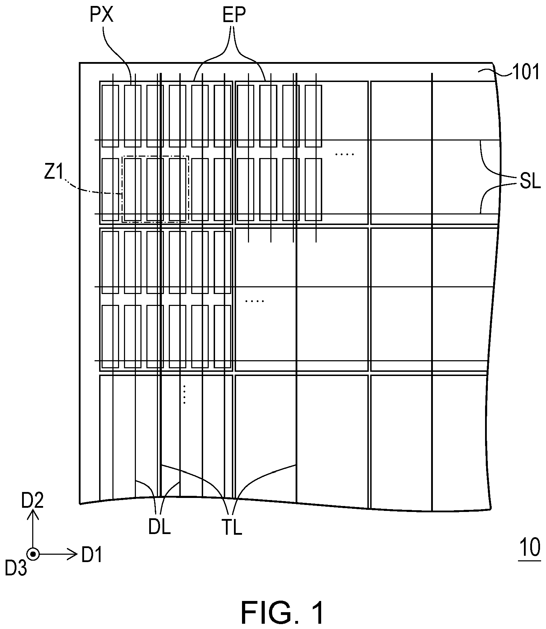

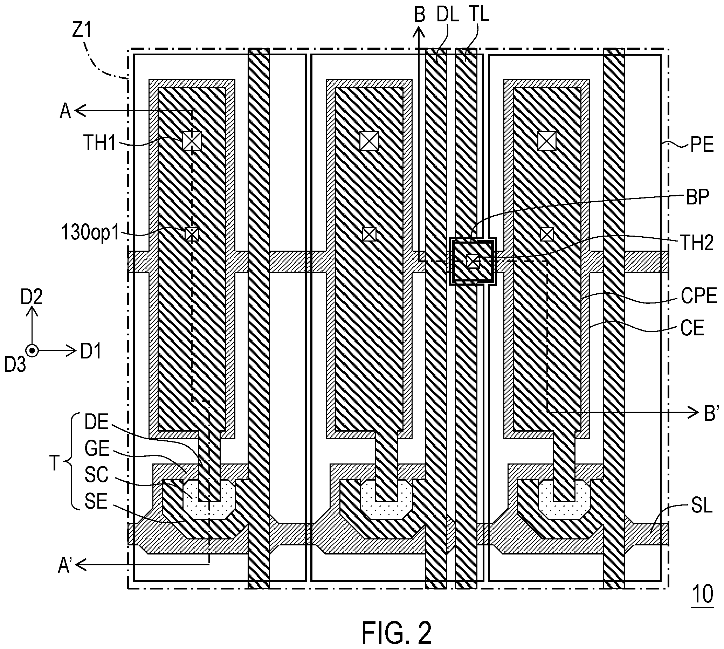

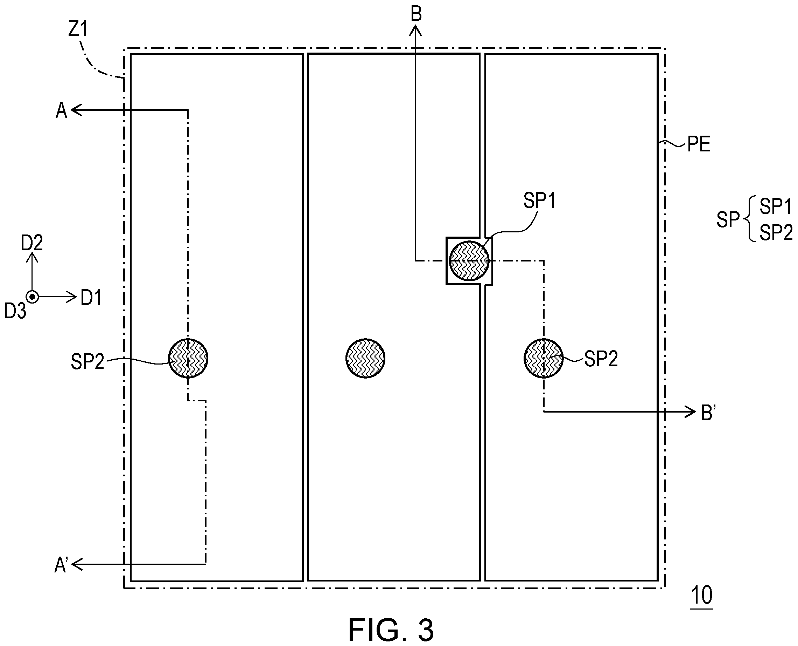

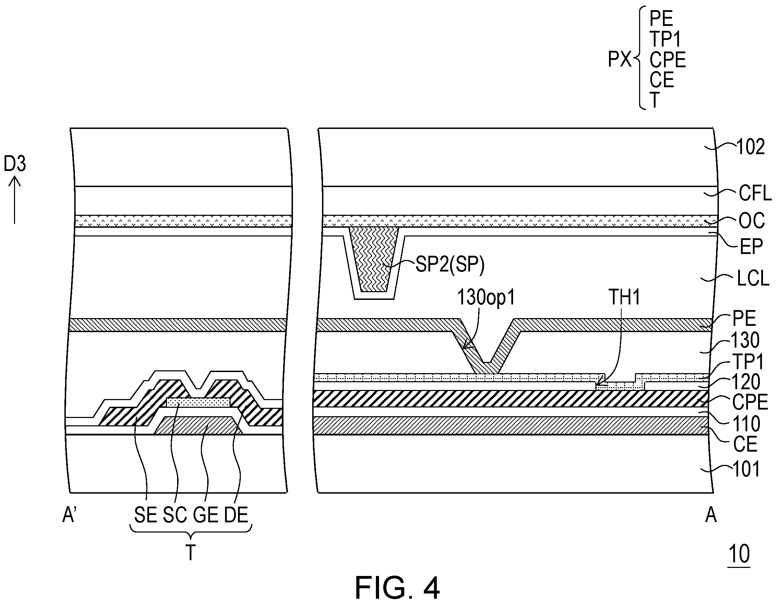

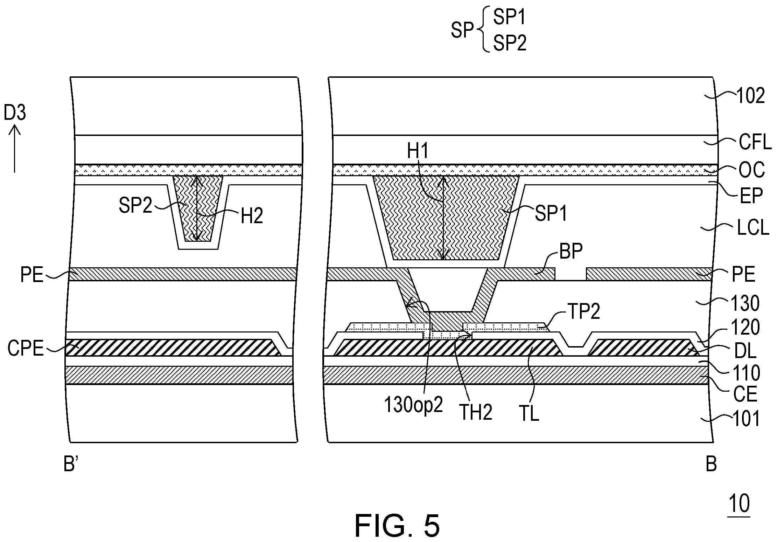

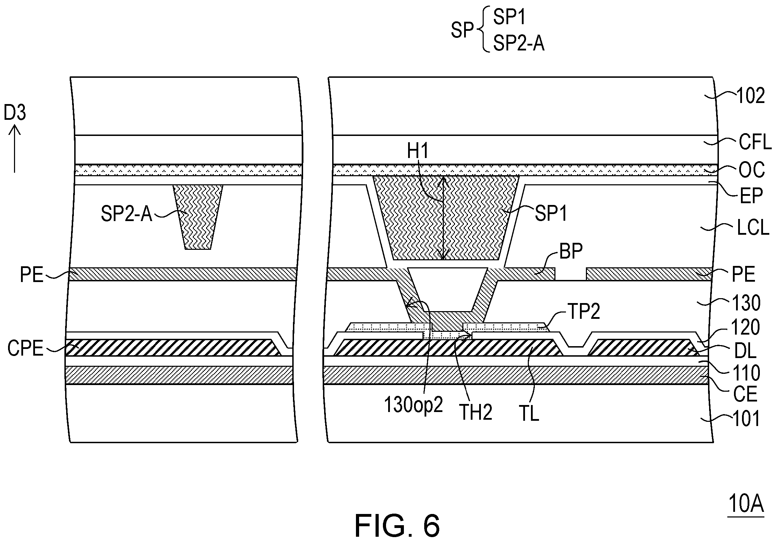

FIG. 1 is a schematic front view of a display panel according to a first embodiment of the disclosure. FIGs. 2 and 3 are schematic partial enlarged views of a part of a film layer of the display panel in FIG. 1. FIGs. 4 and 5 are schematic cross-sectional views of the display panel in FIGs. 2 and 3. FIG. 6 is a schematic cross-sectional view of the display panel shown in FIG. 5 according to another variant embodiment. FIGs. 2 and 3 correspond to an area Z1 in FIG. 1. FIG. 4 corresponds to a cutline A-A' in FIGs. 2 and 3. FIG. 5 corresponds to a cutline B-B' in FIGs. 2 and 3.

Referring to FIGs. 1 to 4, a display panel 10 includes a first substrate 101, a second substrate 102, a liquid crystal layer LCL, multiple data lines DL, multiple scan lines SL, and multiple pixel structures PX. The first substrate 101 and the second substrate 102 are disposed along a stacking direction (e.g., a direction D3) and overlap each other. The liquid crystal layer LCL is disposed between the first substrate 101 and the second substrate 102. Unless otherwise specified, the overlapping relationship of two components is defined by the stacking direction mentioned above, and the stacking direction will not be repeated.

In this embodiment, the data lines DL are arranged on the first substrate 101 along a direction D1 and extend in a direction D2. The scan lines SL are arranged on the first substrate 101 along the direction D2 and extend in the direction D 1. More specifically, the data lines DL intersect the scan lines SL, defining multiple pixel regions of the display panel 10. The pixel structures PX respectively correspond to the pixel regions and are disposed on the first substrate 101, each electrically connected to a scan line SL and a data line DL. For example, the pixel structures PX may be arranged in multiple rows and columns along the direction D1 and the direction D2 respectively. That is, the pixel structures PX are arranged in arrays on the first substrate 101.

In detail, each pixel structure PX has an active element T and a pixel electrode PE electrically connected to each other. In this embodiment, the method of forming the active element T includes the following steps. A gate electrode GE, a gate insulating layer 110, a semiconductor pattern SC, a source electrode SE, and a drain electrode DE are sequentially formed on the first substrate 101. The semiconductor pattern SC is disposed in a manner of overlapping the gate electrode GE. The source electrode SE and the drain electrode DE overlap the semiconductor pattern SC and electrically contact two different regions of the semiconductor pattern SC. In this embodiment, the gate electrode GE of the active element T may be selectively disposed below the semiconductor pattern SC to form a bottom-gate thin film transistor (TFT), but is not limited thereto. In other embodiments, the gate electrode of the active element may also be selectively disposed above the semiconductor pattern to form a top-gate TFT.

Furthermore, an insulating layer 120 and an insulating layer 130 may sequentially cover the active element T. In this embodiment, the insulating layer 120 is, for example, a passivation layer, and the insulating layer 130 is, for example, a planarization layer. For example, in this embodiment, the pixel structure PX may further include a common electrode CE, a capacitor electrode CPE, and a transfer pattern TP1 that overlap each other. The common electrode CE is disposed between the first substrate 101 and the gate insulating layer 110. The capacitor electrode CPE is disposed between the gate insulating layer 110 and the insulating layer 120. The transfer pattern TP1 is disposed between the insulating layer 120 and the insulating layer 130. Therefore, the capacitor electrode CPE, the common electrode CE, and the gate insulating layer 110 sandwiched in between may form a storage capacitor. In other embodiments, the pixel structure PX may not include the common electrode CE and the capacitor electrode CPE overlapping each other.

In this embodiment, the insulating layer 130 has an opening 130op1. The opening 130op1 exposes a part of a surface of the transfer pattern TP1. The pixel electrode PE of the pixel structure PX is disposed on a surface of the insulating layer 130 and electrically connected to the transfer pattern TP1 through the opening 130op1 of the insulating layer 130. The transfer pattern TP1 is electrically connected to the capacitor electrode CPE through a contact hole TH1 of the insulating layer 120, and the capacitor electrode CPE may extend from the drain electrode DE of the active element T. However, the disclosure is not limited thereto.

It should be noted that the gate electrode GE, the source electrode SE, the drain electrode DE, the semiconductor pattern SC, the gate insulating layer 110, the passivation layer (i.e., the insulating layer 120), and the planarization layer (i.e., the insulating layer 130) may be respectively realized through any gate electrode, any source electrode, any drain electrode, any semiconductor pattern, any gate insulating layer, any passivation layer, and any planarization layer used for reflective display panels and known to those skilled in the art. Moreover, the gate electrode GE, the source electrode SE, the drain electrode DE, the semiconductor pattern SC, the gate insulating layer 110, the passivation layer, and the planarization layer may be respectively formed by any method known to those skilled in the art. Therefore, a detailed description will be omitted.

In this embodiment, the pixel electrode PE is, for example, a reflective electrode. The material of the reflective electrode includes metal, alloy, nitride of metal materials, oxide of metal materials, oxynitride of metal materials, or other suitable materials, or a stacked layer of metal materials and other conductive materials. That is, the display panel 10 in this embodiment may be a reflective liquid crystal display panel, but is not limited thereto. In some embodiments, the display panel 10 may be a total reflection display panel or a transflective display panel.

Referring to FIGs. 1, 2, and 5, the display panel 10 further includes multiple touch signal lines TL and multiple bridge pads BP. In this embodiment, the touch signal lines TL are arranged on the first substrate 101 at intervals along the direction D1 and extend in the direction D2. For example, the touch signal lines TL and the data lines DL may be of the same film layer, but are not limited thereto.

The bridge pads BP are disposed on the first substrate 101 and are electrically connected to the touch signal lines TL respectively. In detail, in this embodiment, a transfer pattern TP2 may be disposed between each bridge pad BP and a corresponding touch signal line TL, and each bridge pad BP is electrically connected to the corresponding touch signal line TL through the transfer pattern TP2. For example, the transfer pattern TP2 may be electrically connected to the touch signal line TL through a contact hole TH2 of the insulating layer 120, and the bridge pad BP may be electrically connected to the transfer pattern TP2 through an opening 130op2 of the insulating layer 130. To avoid additional process steps, the bridge pads BP and the pixel electrodes PE may be of the same film layer, and the transfer pattern TP2 and the transfer pattern TP1 of the pixel structure PX may be of the same film layer. However, the disclosure is not limited thereto.

Referring to FIGs. 1 to 5, the display panel 10 further includes multiple electrode patterns EP and multiple spacers SP. The electrode patterns EP are arranged on the second substrate 102 at intervals along the direction D1 and the direction D2, and overlap the pixel electrodes PE of the pixel structures PX. The spacers SP are disposed on the second substrate 102 and separate chambers, which may accommodate the liquid crystal layer LCL, between the first substrate 101 and the second substrate 102.

In this embodiment, the spacers SP include, for example, multiple first spacers SP1 and multiple second spacers SP2. The first spacers SP1 are disposed in a manner of overlapping the bridge pads BP respectively. The second spacers SP2 may be disposed in a manner of overlapping the pixel electrodes PE of the pixel structures PX. It is noted that in the stacking direction (e.g., the direction D3) of the first substrate 101 and the second substrate 102, a first height H1 of the first spacer SP1 is greater than a second height H2 of the second spacer SP2. The first spacers respectively abut on the bridge pads, and each of the electrode patterns EP covers one of the first spacers SP1 to be electrically connected to a corresponding one of the bridge pads BP. That is, an electrical connection relationship between the electrode pattern EP on the second substrate 102 and the touch signal line TL on the first substrate 101 may be realized through an abutting relationship (as shown in FIG. 5) between the first spacer SP1 and the bridge pad BP.

It is specifically noted that in this embodiment, an operating cycle of the display panel 10 may be divided into a display period and a touch period. During the display period, an electric field generated between the electrode patterns EP and the pixel electrodes PE is adapted to drive multiple liquid crystal molecules (not shown) of the liquid crystal layer LCL to rotate, thereby achieving an arrangement state corresponding to the direction and intensity of the electric field. By changing the arrangement state of the liquid crystal molecules, a polarization state of a light passing through the liquid crystal layer LCL is changed, thereby forming a light output brightness corresponding to the arrangement state.

During the touch period, the electrode patterns EP may serve as sensing electrodes for touch actions. Due to the abutting relationship between the first spacers SP1 and the bridge pads BP, a capacitance change sensed by the electrode pattern EP on the second substrate 102 is not shielded by the liquid crystal capacitance during display. Accordingly, the display panel 10 that performs display pixel driving through the electrode patterns EP and the pixel electrodes PE is enabled with reliable touch control functions at the same time.

In this embodiment, the first spacers SP1 and the second spacers SP2 may be of the same film layer and are located between the electrode patterns EP and the second substrate 102. For example, the first spacers SP1 and the second spacers SP2 may be manufactured using the same mask, such as a half-tone mask. However, the disclosure is not limited thereto. In another variant embodiment, multiple second spacers SP2-A of a display panel 10A may be disposed on a side of the electrode patterns EP facing away from the second substrate 102, as shown in FIG. 6. That is, the second spacers SP2-A and the first spacers SP1 are of different film layers. For example, the first spacers SP1 and the second spacers SP2-A may be manufactured using two different masks respectively. This design prevents the second spacer SP2-A of the display panel 10A from being compressed by an external force and thus abutting the pixel electrode PE, resulting in an electrical conduction between the electrode pattern EP and the pixel electrode PE.

Referring to FIGs. 4 and 5, in this embodiment, a color filter layer CFL and an overcoat layer OC may further be selectively disposed on the second substrate 102. The color filter layer CFL is disposed between the overcoat layer OC and the second substrate 102. The electrode patterns EP are disposed on the overcoat layer OC. For example, the color filter layer CFL may have multiple filter patterns (not shown). The filter patterns overlap the pixel electrodes PE and are adapted to allow for light of various colors (such as red, green, and blue, but not limited thereto) to pass through. However, the disclosure is not limited thereto. In other embodiments, the color filter layer CFL may not be disposed on the second substrate 102.

The following embodiments follow the element reference numbers and partial content of the foregoing embodiments, where same reference numbers are used to represent the same or like elements and descriptions of same technical content is omitted. Descriptions of the omitted part may refer to the foregoing embodiments and are not described in the following embodiments again.

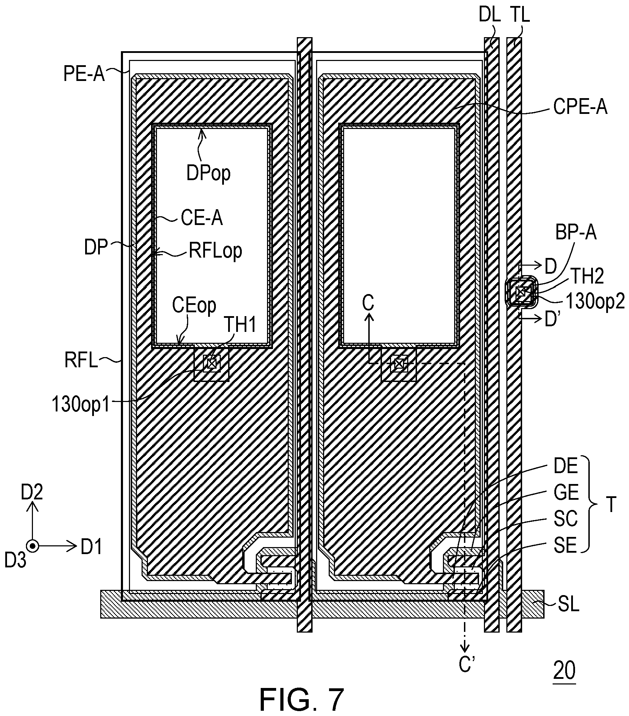

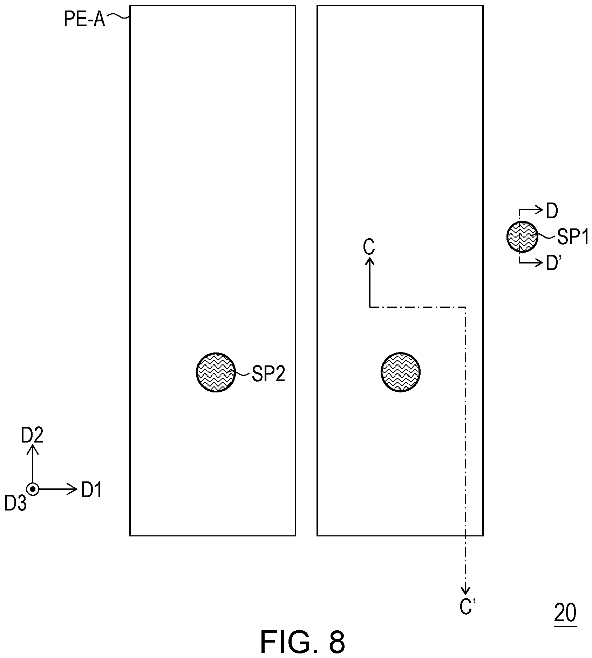

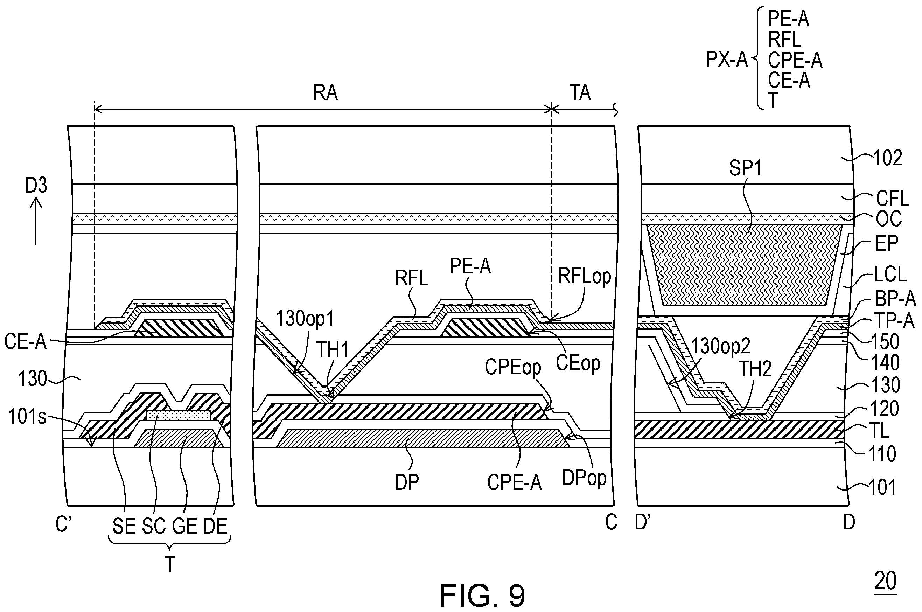

FIGs. 7 and 8 are schematic front views of the part of the film layer of the display panel according to the second embodiment of the disclosure. FIG. 9 is a schematic cross-sectional view of the display panel in FIGs. 7 and 8. FIG. 9 corresponds to cutlines C-C' and D-D' in FIGs. 7 and 8.

Referring to FIGs. 7 to 9, the main difference between a display panel 20 in this embodiment and the display panel 10 in FIGs. 2 to 5 is the design of the pixel structure. Specifically, in the display panel 20 in this embodiment, a pixel structure PX-A further includes a reflective layer RFL. The reflective layer RFL is disposed on the pixel electrode PE-A and has an opening RFLop that overlaps the pixel electrode PE-A. For example, an orthogonal projection of the opening RFLop of the reflective layer RFL on a substrate surface 101s of the first substrate 101 falls within an orthogonal projection of the pixel electrode PE-A on the substrate surface 101s. That is, the opening RFLop of the reflective layer RFL completely overlaps the pixel electrode PE-A.

In this embodiment, the reflective layer RFL defines a reflective region RA of the pixel structure PX, and the opening RFLop defines a light-transmitting region TA of the pixel structure PX. More specifically, the display panel 20 in this embodiment may be a transflective liquid crystal display panel or a micro-transflective liquid crystal display panel.

Furthermore, in this embodiment, an insulating layer 140 and an insulating layer 150 are disposed between the pixel electrode PE-A and the insulating layer 130. The insulating layers 140 and 150 are, for example, passivation layers, but are not limited thereto. It is noted that in this embodiment, a common electrode CE-A of the pixel structure PX-A is disposed between the insulating layers 140 and 150. Therefore, compared to the pixel structure PX in FIG. 4, which has only one storage capacitor, the pixel structure PX-A in this embodiment has two storage capacitors connected in parallel. One of the two storage capacitors consists of a capacitor electrode CPE-A, the common electrode CE-A, and the insulating layer 130 sandwiched in between. The other storage capacitor consists of a pixel electrode PE-A, the common electrode CE-A, and the insulating layer 150 sandwiched in between.

On the other hand, in this embodiment, a bridge pad BP-A and a transfer pattern TP-A are both disposed on the insulating layer 150. No film layer is disposed between the bridge pad BP-A and the transfer pattern TP-A. More specifically, the bridge pad BP-A and the reflective layer RFL of the pixel structure PX-A are of the same film layer. The transfer pattern TP-A and the pixel electrode PE-A of the pixel structure PX-A are of the same film layer. Accordingly, the process steps of the display panel 20 may be simplified.

In this embodiment, a dummy pattern DP may be disposed between the capacitor electrode CPE-A and the first substrate 101. The dummy pattern DP and the gate electrode GE may be of the same film layer. For example, the dummy pattern DP may have a floating potential and is configured to improve the flatness of a surface of the pixel structure PX-A in the reflective region RA, further improving the manufacturing yield and reflectivity of the reflective layer RFL.

The configuration relationship and technical effects of the first spacer SP1, the electrode pattern EP, the bridge pad BP-A, and the touch signal line TL in this embodiment are similar to the display panel 10 in FIG. 5. Therefore, for a detailed description, please refer to the relevant paragraphs of the above embodiments, which are not repeated herein. On the other hand, since the pixel structure PX-A in this embodiment has the light-transmitting region TA, the common electrode CE-A, the capacitor electrode CPE-A, and the dummy pattern DP have an opening CEop, an opening CPEop, and an opening DPop respectively, wherein the the opening CEop, the opening CPEop, and the opening DPop overlap the light-transmitting region TA.

In summary, in the display panel in an embodiment of the disclosure, not only the pixel structures, the data lines, and the scan lines are disposed on the first substrate, the touch signal lines electrically connected to each other as well as bridge pads are also disposed on the first substrate. On the second substrate, not only the electrode patterns are disposed, the first spacer adaptable to be attached to the bridge pad is also disposed. An electric field generated when the pixel electrode on the first substrate and the electrode pattern on the second substrate are energized is used to drive the liquid crystal layer for display. In addition, the electrode pattern may be electrically connected to the touch signal line on the first substrate through the bridge pad by covering the first spacer, so as to realize the touch control function of the display panel.

## Claims

1. A display panel (10, 10A, 20), comprising:
a first substrate (101) and a second substrate (102), disposed along a stacking direction (D3) and overlapping each other;
a liquid crystal layer (LCL), disposed between the first substrate (101) and the second substrate (102);
a plurality of data lines (DL), arranged on the first substrate (101) along a first direction (D1);
a plurality of scan lines (SL), arranged on the first substrate (101) along a second direction (D2), wherein the first direction (D1) intersects the second direction (D2);
a plurality of touch signal lines (TL), disposed on the first substrate (101);
a plurality of pixel structures (PX, PX-A), disposed on the first substrate (101), each of the plurality of pixel structures (PX, PX-A) having an active element (T) and a pixel electrode (PE, PE-A), wherein the active element (T) is electrically connected to the pixel electrode (PE, PE-A), one of the plurality of data lines (DL), and one of the plurality of scan lines (SL);
a plurality of bridge pads (BP, BP-A), disposed on the first substrate (101) and electrically connected to the plurality of touch signal lines (TL) respectively;
a plurality of electrode patterns (EP), arranged on the second substrate (102) at intervals along the first direction (D1) and the second direction (D2) and overlapping the plurality of pixel electrodes (PE, PE-A) of the plurality of pixel structures (PX, PX-A); and
a plurality of first spacers (SP1), disposed on the second substrate (102) and located between the plurality of electrode patterns (EP) and the second substrate (102), wherein the plurality of first spacers (SP1) respectively abut on the plurality of bridge pads (BP, BP-A) along the stacking direction (D3), and each of the plurality of electrode patterns (EP) covers one of the plurality of first spacers (SP1) to be electrically connected to one of the plurality of bridge pads (BP, BP-A).

2. The display panel (10, 10A, 20) of claim 1, further comprising:
a plurality of second spacers (SP2, SP2-A), disposed on the second substrate (102), wherein a first height (H1) of each of the plurality of first spacers (SP1) along the stacking direction (D3) is greater than a second height (H2) of each of the plurality of second spacers (SP2, SP2-A) along the stacking direction (D3).

3. The display panel (10, 10A, 20) of claim 2, wherein the plurality of first spacers (SP1) and the plurality of second spacers (SP2, SP2-A) are of a same film layer.

4. The display panel (10, 10A, 20) of claim 2, wherein the plurality of electrode patterns (EP) cover the plurality of first spacers (SP1), and the plurality of second spacers (SP2, SP2-A) are disposed on a side of the plurality of electrode patterns (EP) facing away from the second substrate (102).

5. The display panel (10, 10A, 20) of claim 4, wherein the plurality of second spacers (SP2, SP2-A) overlap the plurality of pixel electrodes (PE, PE-A) of the plurality of pixel structures (PX, PX-A).

6. The display panel (10, 10A, 20) of claim 1, wherein the plurality of bridge pads (BP, BP-A) and the plurality of pixel electrodes (PE, PE-A) are of a same film layer.

7. The display panel (10, 10A, 20) of claim 1, wherein each of the plurality of pixel structures (PX, PX-A) further comprises a first transfer pattern (TP1), disposed between the pixel electrode (PE, PE-A) and the active element (T), wherein the pixel electrode (PE, PE-A) is electrically connected to the active element (T) through the first transfer pattern (TP1), and a second transfer pattern (TP2) is disposed between each of the plurality of bridge pads (BP, BP-A) and one of the plurality of touch signal lines (TL), each of the plurality of bridge pads (BP, BP-A) being electrically connected to the one of the plurality of touch signal lines (TL) through the second transfer pattern (TP2), wherein the first transfer pattern (TP1) and the second transfer pattern (TP2) are of a same film layer.

8. The display panel (10, 10A, 20) of claim 1, wherein each of the plurality of pixel structures (PX, PX-A) further comprises a reflective layer (RFL), the reflective layer (RFL) having an opening (RFLop) overlapping the pixel electrode (PE, PE-A), wherein the reflective layer (RFL) defines a reflective region (RA) of each of the plurality of pixel structures (PX, PX-A), and the opening (RFLop) of the reflective layer (RFL) defines a light-transmitting region (TA) of each of the plurality of pixel structures (PX, PX-A), wherein an orthogonal projection of the opening (RFLop) on a substrate surface (101s) of the first substrate (101) falls within an orthogonal projection of the pixel electrode (PE, PE-A) on the substrate surface (101s).

9. The display panel (10, 10A, 20) of claim 8, wherein the plurality of bridge pads (BP, BP-A) and the reflective layer (RFL) of each of the plurality of pixel structures (PX, PX-A) are of a same film layer.

10. The display panel (10, 10A, 20) of claim 8, wherein a transfer pattern (TP1, TP2, TP-A) is disposed between each of the plurality of bridge pads (BP, BP-A) and one of the plurality of touch signal lines (TL), each of the plurality of bridge pads (BP, BP-A) being electrically connected to the one of the plurality of touch signal lines (TL) through the transfer pattern (TP1, TP2, TP-A), wherein the transfer pattern (TP1, TP2, TP-A) and the pixel electrode (PE, PE-A) are of a same film layer.
